# EUROPÄISCHE PATENTANMELDUNG

(11) **EP 1 342 523 A2**
(43) Veröffentlichungstag der Anmeldung: **10.09.2003**
(21) Anmeldenummer: 03004658.5
(22) Anmeldetag: 03.03.2003
(51) Int. Cl.: B23F 5/02, B23F 23/12

(54) **Vorrichtung zum automatischen Zuordnen der Lage eines Bearbeitungswerkzeuges zu einem Werkstück**

(30) Priorität: 07.03.2002 DE 20203661 U
(71) Anmelder: LIEBHERR-VERZAHNTECHNIK GmbH, 87437 Kempten (DE)
(72) Erfinder: Zankl, Manfred, 87634 Obergünzburg (DE); Spiess, Klaus, 87452 Altusried (DE)
(74) Vertreter: Laufhütte, Dieter, Dr.-Ing.

(57) **Zusammenfassung**

Die Erfindung betrifft eine Vorrichtung zum automatischen Zuordnen der Lage eines sich drehenden Werkzeuges (10) bezüglich einer vorbearbeiteten Verzahnung eines zu bearbeitenden Werkstückes (12). Erfindungsgemäß ist das Werkzeug in einer beliebigen Position zwischen die Zahnflanken einfahrbar. In einem Tastmodus ist die Entfernung von der Einfahrposition zu den Zahnflanken durch relatives Verdrehen des Werkstücks zu dem Werkzeug bestimmbar und aus diesem Wert ist die gewünschte Zielposition des Werkzeuges berechenbar.

## Beschreibung

Die Erfindung betrifft eine Vorrichtung zum automatischen Zuordnen der Lage eines sich drehenden Werkzeuges bezüglich einer vorbearbeiteten Verzahnung eines zu bearbeitenden Werkstücks.

Bei bekannten drehenden Bearbeitungswerkzeugen, wie beispielsweise Schleifscheiben für die Bearbeitung von Zahnflanken eines Zahnrades, erfolgt das erstmalige in Eingriff bringen von der Schleifscheibe und der vorbearbeiteten Verzahnung des zu bearbeitenden Werkstückes im allgemeinen im Stillstand der Bearbeitungsmaschine von Hand, d.h. visuell. Es wurden bereits verschiedene Versuche unternommen, das so genannte händische Einmitten der sich drehenden Bearbeitungswerkzeuge zwischen der vorbearbeiteten Verzahnung des zu bearbeitenden Werkstückes zu automatisieren.

Beispielsweise aus der DE 27 44 562 B2 ist es bekannt, dass ein zwischen das Werkzeug und das Werkstück einführbarer Messgeber je ein einen Differenzdruck pneumatisch messendes Düsenpaar für das Werkzeug und das Werkstück aufweist, wobei jedes Düsenpaar eine einstellbare Referenzdüse und eine auf das Werkzeug bzw. das Werkstück ausrichtbare Messdüse zur Erzeugung eines dem Differenzdruck entsprechenden und der Erkennungsschaltung zugeführten Signal umfasst. Diese Lösung ist aufwendig, da zusätzliche Messgeber vorzusehen sind, die die Gesamtvorrichtung verteuern und die darüberhinaus störanfällig sind.

Aufgabe der Erfindung ist es daher, eine gattungsgemäße Vorrichtung an die Hand zu geben, die möglichst ohne zusätzliche Messgeber ein automatisches Zuordnen der Lage des Bearbeitungswerkzeuges zu einem Werkstück ermöglicht.

Erfindungsgemäß wird diese Aufgabe bei einer gattungsgemäßen Vorrichtung durch die Kombination der Merkmale des Anspruchs 1 gelöst. Demnach wird die automatische Zuordnung der Lage eines sich drehenden Werkzeuges bezüglich einer vorbearbeiteten Verzahnung eines zu bearbeitenden Werkstückes in einfacher Weise dadurch ermöglicht, dass das Werkzeug in einer beliebigen Position zwischen die Zahnflanken einfahrbar ist und dass in einem Tastmodus die Entfernung von der Einfahrposition zu den Zahnflanken durch relatives Verdrehen des Werkstückes zu dem Werkzeug bestimmbar und aus diesem Wert die gewünschte Zielposition des Werkzeuges berechenbar ist. Mittels dieser Lösung kann also das Werkzeug an einer beliebigen Stelle der Zahnlücke einer vorbearbeiteten Verzahnung eingefahren werden. Durch Abfahren des Tastmodus, d.h. durch Hin- und Herbewegen des zu bearbeitenden Zahnradwerkstückes wird dann durch Abtasten der jeweiligen Position der die Zahnlücke begrenzenden Zahnflanken die genaue Position des sich drehenden Bearbeitungswerkzeuges bestimmt. Weiterhin kann zum Einmitten des Werkzeuges in der Zahnlücke der Korrekturwert errechnet werden, um den das Werkstück verdreht werden muss, damit das sich drehende Werkzeug in der gewünschten eingemitteten Stellung liegt.

Bevorzugte Ausgestaltungen der Erfindung ergeben sich aus den sich an den Hauptanspruch anschließenden Unteransprüchen.

Besonders vorteilhaft wird das sich drehende Werkzeug zur Lagepositionierung unterschiedlich tief zwischen die Flanken der vorbearbeiteten Verzahnung des zu bearbeitenden Werkstücks eingefahren. So kann der Abtastmodus bei einer zunächst geringen Eintauchtiefe des Werkzeuges in die Zahnlücke ermittelt werden. Nach dieser Vorermittlung kann dann das sich drehende Werkzeug tiefer in die Zahnlücke eintauchen, um den Abtastvorgang nochmals zu wiederholen.

Weitere Einzelheiten und Vorteile der Erfindung werden anhand zweier schematisch in der Zeichnung dargestellten Ausführungsbeispiele näher erläutert.

Es zeigen:
- Figur 1:: eine schematische Detaildarstellung des Eingriffs des Formenwerkzeuges in ein zu bearbeitendes Zahnrad und
- Figur 2:: den Eingriff eines Wälzwerkzeuges in die Zahnlücke eines zu bearbeitenden Zahnrades.

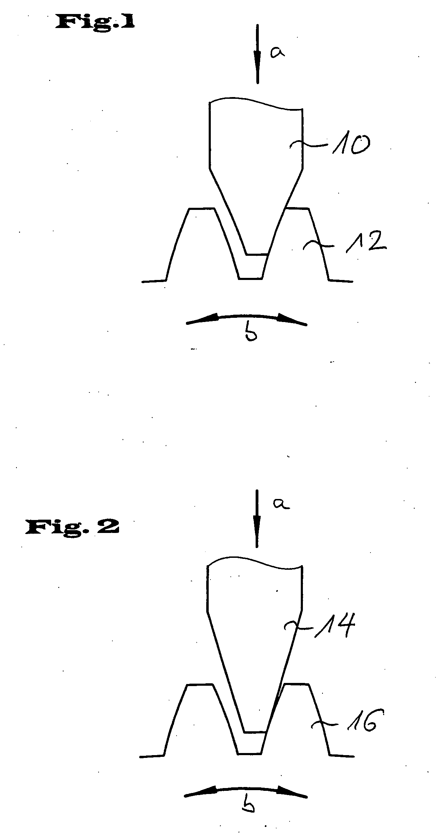

In den Figuren 1 und 2 sind zwei unterschiedliche Werkzeugformen der drehenden Bearbeitungswerkzeuge schematisch dargestellt. Im oberen Teil ist als typisches Formwerkzeug eine Schleifscheibe 10 dargestellt, deren Profil eine Evolvente ist. Bei der Anwendung derartiger Werkzeuge wird Lücke um Lücke geschliffen und die Form des Werkzeuges 10 bildet sich direkt im Werkstück 12 ab.

Figur 2 zeigt die Anwendung eines Wälzwerkzeugs 14. Die Werkzeugflanke ist hier geradlinig ausgebildet. Die im Werkstück 16 zu erzeugende Evolvente ergibt sich bei der Bearbeitung als Hüllkurve durch eine Wälzbewegung. Ein Anwendungsfall für ein derartiges Wälzwerkzeug wären beispielsweise Schleifschnecken, die zum Wälzschleifen verwendet werden. Derartige Schleifschnecken sind geradflankige Werkzeuge.

Das automatische Einmitten der drehenden Bearbeitungswerkzeuge 10 bzw. 14 in die Zahnlücken der vorbearbeiteten Verzahnung der zu bearbeitenden Werkstücke 12 bzw. 16 erfolgt mit der erfindungsgemäßen Vorrichtung wie folgt:

Vor dem automatischen Einmitten muss der Bediener nach Aufforderung prüfen, ob das Werkzeug in die Zahnlücke der vorbearbeiteten Verzahnung passt. Das bedeutet, dass das Werkzeug ohne Kollision zumindest ungefähr ein Drittel der Tauchtiefe in die Zahnlücke eintauchen können muss. Falls das drehende Werkzeug unmittelbar gegenüber einem Zahn angeordnet ist, muss der Werkzeughalterungstisch (in den Figuren nicht dargestellt) um ca. 1/6 Zahn fortbewegt werden. Nach dieser Erstpositionierung wird nun der automatische Einmittvorgang begonnen. Zunächst wird das Moment des Werkzeugaufnahmetisches reduziert und das sich drehende Werkzeug wird ca. um ¼ der Tiefe der Zahnlücke in Pfeilrichtung a gemäß Figur 1 und Figur 2 in die Zahnlücke eingetaucht. Der Vorschub der Vorrichtung wird auf einen bestimmten Tastmodus gestellt, wobei die Verdrehgeschwindigkeit des Werkzeugaufnahmetisches ebenfalls reduziert wird. Der Werkzeugaufnahmetisch fährt langsam in Doppelpfeilrichtung b (vgl. Figur 1 bzw. Figur 2) an die rechte Zahnflanke. Nach dem Erreichen der rechten Zahnflanke fährt der Werkzeugaüfnahmetisch langsam in entgegengesetzter Richtung, bis das Werkzeug 10 bzw. 14 an der linken Zahnflanke anliegt. Nachdem beide Flanken abgetastet sind, wird der Tastmodus ausgeschaltet und die Verfahrgeschwindigkeit und das Moment des Werkzeugaufnahmetisches werden auf die ursprünglichen Werte zurückgesetzt. Es wird die Mitte zwischen den beiden Zahnflanken errechnet und das sich drehende Werkzeug wird entsprechend in der Mitte positioniert.

Falls nun keine oder nur eine Zahnflanke gefunden wurde, wird der Bediener darauf hingwiesen und gefragt, ob er mit 2/3 Tauchtiefe in die Zahnlücke hinein fortfahren will. Wiederum wird das Moment bzw. die Geschwindigkeit des Werkzeugaufnahmetisches reduziert und das sich drehende Werkzeug wird um 2/3 in die Zahnlücke in Pfeilrichtung a in den Figuren 1 bzw. 2 eingetaucht. Es wird wieder der Tastmodus festgelegt und der Werkzeugaufnahmetisch wird in die Pfeilrichtung b langsam zur rechten Zahnflanke und nach dem Erreichen der rechten Zahnflanke langsam zur linken Zahnflanke hin bewegt. Anschließend wird wiederum der sogenannte Tastmodus ausgeschaltet und die ursprüngliche Geschwindigkeit und das ursprüngliche Moment des Werkzeugaufnahmetisches eingestellt. Über einen hier nicht näher beschriebenen Prozessor wird der Mittenwert zwischen den Zahnflanken berechnet und der Werkzeugaufnahmetisch wird nun in diesem Mittenwert positioniert, wodurch der automatische Einmittvorgang abgeschlossen ist, so dass sich der automatische Bearbeitungsvorgang der vorbearbeiteten Verzahnung unmittelbar anschließen kann.

## Patentansprüche

1. Vorrichtung zum automatischen Zuordnen der Lage eines sich drehenden Werkzeuges bezüglich einer vorbearbeiteten Verzahnung eines zu bearbeitenden Werkstückes,
**dadurch gekennzeichnet,**
**dass** das Werkzeug in einer beliebigen Position zwischen die Zahnflanken einfahrbar ist und dass in einem Tastmodus die Entfernung von der Einfahrposition zu den Zahnflanken durch relatives Verdrehen des Werkstücks zu dem Werkzeug bestimmbar und aus diesem Wert die gewünschte Zielposition des Werkzeuges berechenbar ist.

2. Vorrichtung nach Anspruch 1, **dadurch gekennzeichnet, dass** die gewünschte Zielposition die Mittenstellung des sich drehenden Werkzeuges zwischen den Zahnflanken der vorbearbeiteten Verzahnung des zu bearbeitenden Werkstückes ist.

3. Vorrichtung nach Anspruch 1 oder 2, **dadurch gekennzeichnet, dass** das Werkzeug im Tastmodus bei geringerer Verdrehgeschwindigkeit des Werkstücks bis zum Festanschlag an die Zahnflanke fahrbar ist.

4. Vorrichtung nach einem der Ansprüche 1 bis 3, **dadurch gekennzeichnet, dass** das sich drehende Werkzeug nach festgelegten Programmschritten zur Lagepositionierung unterschiedlich tief zwischen die Flanken der vorbearbeiteten Verzahnung des zu bearbeitenden Werkstückes einfahrbar ist.
